(19) Europäisches Patentamt
European Patent Office
Office européen des brevets

(11) Publication number: **0 030 053**
**A1**

(12) **EUROPEAN PATENT APPLICATION**

(21) Application number: 80201099.1

(22) Date of filing: 20.11.80

(51) Int. Cl.³: **G 01 S 7/40**

(30) Priority: 30.11.79 US 99103

(43) Date of publication of application: 10.06.81 Bulletin 81/23

(84) Designated Contracting States: DE FR GB IT NL SE

(71) Applicant: The Boeing Company
P.O. Box 3707
Seattle Washington 98124(US)

(72) Inventor: Carpenter, Dennis Owen
2915 139th Pl. S.E.
Bothell Washington 98011(US)

(72) Inventor: Ceola, Robert Eugene
29306 37th Pl. S.
Auburn Washington 98002(US)

(72) Inventor: Ebert, Philip Conrad
20819 53rd Ave. W.
Lynnwood Washington 98036(US)

(74) Representative: Bruin, Cornelis Willem et al,
OCTROOIBUREAU ARNOLD & SIEDSMA P.O. Box 18558
NL-2502 EN The Hague(NL)

(54) **Aircraft low range radio altimeter simulator.**

(57) The simulator produces both predetermined frequency sinusoidal and predetermined amplitude D.C. signals suitable for use in testing aircraft low range radio altimeters. A clock oscillator signal is frequency divided by a central data unit (CDU) determined divisor. The resulting output is digital to analog converted to simulate the D.C. signals or passed to a sine approximating counter for generating the sinusoidal waveform. By utilizing a CDU, both manual and automatic control is accomplished and rate commands may be realized.

./...

EP 0 030 053 A1

Croydon Printing Company Ltd.

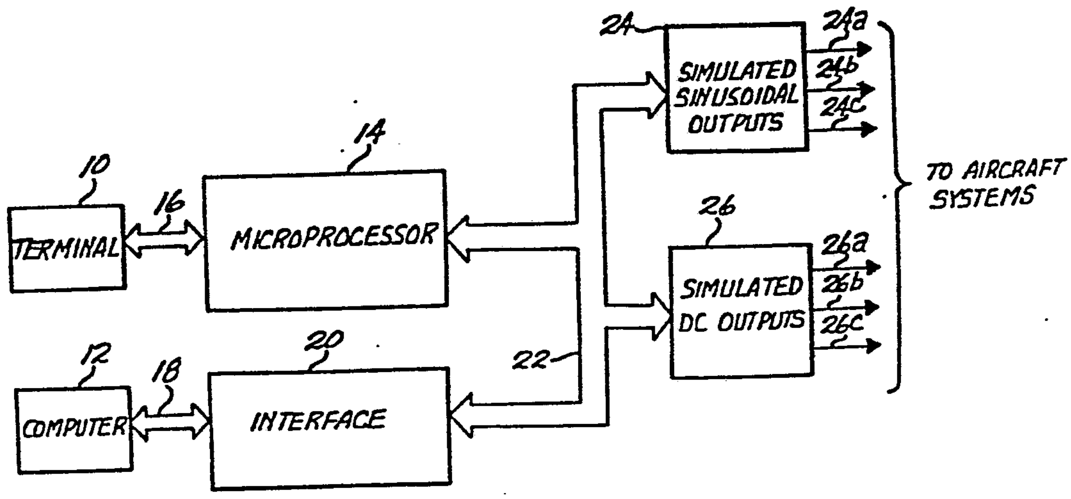
10
TERMINAL
16
14
MICROPROCESSOR
12
COMPUTER
18
20
INTERFACE
22
24
SIMULATED SINUSOIDAL OUTPUTS
24a
24b
24c
26
SIMULATED DC OUTPUTS
26a
26b
26c
TO AIRCRAFT SYSTEMS

Fig.1

This invention pertains to the electrical signal generation art and , more particularly, to a means for simulating signals encountered by aircraft radio altimeters.

Modern commercial aircraft are commonly provided with low range radio altimeter systems. Such systems produces electrical output signals corresponding to the aircraft's altitude. These signals are then fed to various aircraft systems including autopilot control and the flight deck altitude displays.

In one commercially available low range radio altimeter system a sinusoidal voltage is produced which varies from 1,425 hertz at zero feet to 121,425 hertz at 3,000 feet. Altitude versus frequency is linear at the rate of 4,000 hertz per 100 feet altitude.

In an alternate system, a D.C.voltage is produced which is directly proportional to height of the aircraft up to an altitude of 480 feet with a logarithmic relationship thereafter to an altitude of 3,000 feet.

In order to test the various aircraft systems which are dependent upon the low range radio altimeter, it is necessary that typical signals produced from the altimeter system be simulated. The existing method of simulating the altimeter signals is a manually operated generator which requires the attention of an operator to use during aircraft testing. Not only is the manual method tedious and time consuming but, due to the limitations of an operator's varying the controls, the system does not truly simulate the signals encountered during flight. That is , an operator cannot control signal generation at the rates with which normal aircraft operate.

Thus, there is a long felt need in this art for a low range radio altimeter systems signal simulator which is capable of automatic operation and which more nearly generates signals at rates encountered by aircraft in flight.

It is an object of this invention, therefore, to provide an aircraft radio altitude signal simulator which is capable of automatic operation.

It is a further object of this invention to provide the above described signal simulator, which simulator is capable of operating at rates similar to that encountered by an aircraft during flight.

It is a further object of the invention to provide the above described signal simulator which is capable of producing both frequency varying and analog level varying signals.

Briefly, according to the invention, the apparatus for simulating a variable frequency periodic waveform is comprised of an oscillator which produces a predetermined clock signal , the clock having a frequency substantially higher than the highest signal to be simulated. A frequency divider, which receives the clock signal at its input, has a controllable divisor. The frequency divider divisor is controlled by a control device which produces a predetermined divisor signal in response to the frequency of the signal to be simulated. The resulting divided clock signal is converted to the periodic waveform by a suitable converter.

For the simulation of analog signals, the apparatus comprises a digital to analog converter which converts the frequency divided clock signal to a corresponding amplitude analog signal.

Figure 1 is a block diagram illustrating the generalized topology of the instant simulator system;

Figure 2 is a more detailed block diagram illustrating an arrangement for generating both frequency varying and analog level varying signals;

and Figures 3A,3B are detailed schematic diagrams illustrating the preferred hardware arrangement of the instant invention.

Figure 1 is a block diagram illustrating, in general, the basic topology of the simulator system. Here, the final values, and rates of approaching the final values of the altitude signals to be simulated may be entered via a manual terminal 10 or, under automatic control, via a computer 12. The data from terminal 10 is routed directly to a microprocessor 14 over a two way bus 16. With the computer 12, however, commands are passed via a two way bus 18 through an interface 20 to a common bus 22. As is described more fully with respect to figure 2, interface 20 alters the computer 12 data to a standardized form.

Bus 22 accesses microprocessor 14 as well as the sinusoidal circuitry 24 and the analog or DC simulating circuitry 26.

Thus, in general, both the final value and rate of approaching the final value of the low range radio altimeter signal to be simulated are input to the microprocessor 14 either via a terminal 10 or a computer 12 and interface 20. The microprocessor, in a manner to be described more fully hereinafter, produces a signal which is applied over bus 22 to the sinusoidal circuitry 24 and the D.C.circuitry 26. The circuits 24,26 respond by producing the output sinusoidal or D.C.signals on their output lines 24A-C, 26A-C, respectively. Three output lines are provided since modern aircraft use triple redundant backup systems.

Figure 2 is a more detailed block diagram of the system shown in figure 1. Here, preferably, the manual terminal 10 of figure 1 is shown as a type HT/3 Termiflex hand held portable terminal 30. The HT/3 is a full duplex, 1200 BAUD EIA, RS-232 C terminal. It has a 96 character ASCII keyboard and a single line 12 character alphanumeric display. This system allows all input commands to be displayed on the terminal before being entered into the system and all resultant system outputs (present value, final value and rate) to be selectively displayed under operator control. The HT/3 terminal 30 accesses the microprocessor 34 over a RS-232 bus 32.

The microprocessor 34 is, preferably, a type 8080 having associated therewith 4K of erasable programable read only memory (EPROM) 36 and 1K of random access memory (RAM) 38. All system software is contained within 3K of the EPROM 36. One of ordinary skill in this art, given the discussion herein as well as the operators manual supplied by manufacturers of such microprocessors could easily, without undue experimentation, construct the computer controls necessary to operate the system according to the instant invention. Thus, for purposes of conciseness, such details are not provided herein.

Automatic control of the system may be accomplished via, preferably, a Hewlett/Packard type HP-45 computer 40. As is understood by one of ordinary skill in this art with reference to user manuals for the HP-45, the computer may be utilized to predeterminedly output given final value and rate commands which, in further signal processing in the system, results in the desired simulated radio altimeter signals.

The output from the computer 40 is passed via bus 42 to an EIA type 488 interface 44. Preferably, the interface 44 includes a type 8741, universal peripheral interface 8 bit microcomputer. This functions, in the normal manner, as a word processor and handles communication between the HP-45 and the 8080 microprocessor 34 on the common bus 50.

Thus, the microrocessor 34 responds to either inputs from the hand held terminal 30 or the computer 40 to output a digital bit stream corresponding to the signal to be generated. This signal is addressed to the sinusoidal simulator circuitry, indicated generally at 60 and the analog, D.C.simulating circuitry indicated generally at 70.

The sine wave simulating circuit 60 includes 3 discrete channels, indicated generally at 61-63. As mentioned herein above, many commercial aircraft work on a triple redundant basis, thus providing fail safe protection. Hence, the instant sine wave simulating circuitry produces signals on any one of its three output lines, as indicated. These signals may be identical, or via addressing lines from the microprocessor 34, each channel may be addressed and a corresponding signal produced on its output line, in the well known manner.

Since all three channels 61-63 contain the same circuitry, only one channel will be discussed.

The digital information from the microprocessor 34 is routed to a binary rate multiplier 64. The binary rate multiplier rate 64 acts as a divider having a controllable divisor. As will be more clearly understood with respect to figure 3A, the binary multiplier 64 acts by dividing the clock signal from the microprocessor by a divisor determined by the microprocessor output. This divisor is a function of the signal to be simulated whereby the output from the binary rate multiplier is of a frequency which, when later converted to sine wave, exactly corresponds to the desired simulated signal. The binary rate multiplier multiplies the clock oscillator signal from the microprocessor by the 16 bit binary frequency rate command generated by the microprocessor responsive to the signal to be simulated. The resulting signal is then counted down and passed to a sine approximating counter 66. The sine approximating counter converts the digital bit stream at its input to an approximate sine wave at its output. This output is then filtered in a 6dB per octave low pass filter 68 and passed as an output sinusoidal signal on its corresponding output channel line for the testing of various aircraft systems.

For the case of simulation of analog signals in the simulating circuitry 70, as with the sine wave simulating circuitry 60, three parallel channels, indicated generally at 71-73 are provided. The lines may be triple redundant, or each may be addressed individually by the microprocessor 34 with varying inputs to each, thus producing differing D.C. analog signals at the three output channels.

Since each channel 71-73 contains the same circuitry only one channel will be discussed.

The 12 bit data signal from the microprocessor 34 is passed to a 12 bit digital to analog converter 74. Acting in the well known manner, the digital to analog converter 74 produces an output D.C.analog level corresponding to the data input. This signal is buffered via suitable buffer circuitry 76 and passed on a corresponding output channel to be utilized for testing purposes of various aircraft systems. Thus, the arrangement as shown in figure 2 is capable of accepting the final value, and rate of approaching the final value inputs from either a hand held terminal 30 or a computer 40 and produces corresponding sinusoidal or D.C.voltages at its outputs to exactly simulate the signals produced by aircraft low range radio altimeters.

Figures 3A, 3B are detailed hardware diagrams of the preferred embodiment of the sine wave simulator circuitry 60 of figure 2. Here, the 16 bit binary output from the microprocessor (not shown) is divided into 8 address lines $A_0$-$A_7$ and 8 data lines $D_0$-$D_7$. The first two address lines $A_0$,$A_1$ feed directly into address inputs of a pair of peripheral interface adapters (PIA) 100,102. The remaining address lines $A_2$-$A_7$ feed through a decoder/demultiplexer to the PIA's 100, 102. The 8 data lines $D_0$-$D_7$ feed through a standard buffer circuit 106 to the 8 PIA data inputs which are correspondingly labeled.

The system response to addresses on the address lines $A_0$-$A_7$ is as follows:

Address LRRA 1 causes (PIA) 100,102 to output LRRA 1 data only
LRRA 2 causes (PIA) 100,102 to output LRRA 2 data only
LRRA 4 causes (PIA) 100,102 to output LRRA 3 data only
LRRA 3 causes PIA 100,102 to output LRRA 1 & 2 data only
LRRA 5 causes PIA 100,102 to output LRRA 1& 3 data only
LRRA 6 causes PIA 100,102 to output LRRA 2 & 3 data only
LRRA 7 causes PIA 100,102 to output LRRA 1,2,3 data only.

Thus, command data appearing at the input terminals $D_0$-$D_7$ of either of the PIA's 100,102 may be routed to any one of the three 8 line outputs PA0-7, PB0-7 or PC0-7 as determined by the addressing. In this manner, the signals simulated on any one of the three channels of the system may be directly controlled thus allowing individual channel control.

The output from the PIA's 100, 102 are routed, as shown, to the three channels, indicated generally at 111-113. Since each channel is essentially identical to the other channels, only one channel will be described in detail.

The first channel , channel 111 , is provided with three 6 bit binary rate multipliers 121-123. The binary rate multipliers 121-123 are connected in cascade configuration, as described by application notes on these circuits. Thus, the output at pin 6 of the first and second multipliers 121,122 are connected through inverter buffers 130,131, respectively to the unity cascade inputs at pin 12 of the cascaded multipliers 122,123, respectively.

A clock oscillator signal, provided at block 140 is routed to each binary rate multiplier at its pin 9. Preferably, the clock oscillator is the crystal clock from the microprocessor. In one embodiment of the invention, the microprocessor clock oscillator ran at 18.432 megahertz. Since the binary rate multipliers 121-123 are clocked at this high rate, special care was taken to keep the gate delays equalized. Thus, since the output of binary rate multiplier 121 is combined with the output of multiplier

122, the multiplier 122 clock has to be delayed two gate delays, as provided by logic gates 142,144 so that the combined outputs, at the output of multiplier 122 are timed correctly. Correspondingly, additional delays are provided by logic gates 146,148 to the clock inputs of binary rate multiplier 123.

Each binary rate multiplier 121-123 has its two least significant bits tied to logic zero, with the output from the cascaded triple being taken at pin 6 of the final multiplier 123.

The output from the final binary rate multiplier is a string of pulses equal in width to the width of the clock oscillator. For the example of a 18.432 megohertz clock, each pulse has a width of approximately 27 nanoseconds. Thus, for this example, if only the most significant bit applied to the PIA's 100,102 is high the pulse repetition rate out of the binary rate multipliers is one half the clock frequency, i.e. 9.215 megapulses per second (MPPS), or one pulse every 108 nanoseconds. This is counted down by 128 (in circuitry shown in figure 3B) to form an output frequency of 72 kilohertz.

If the next most significant bit is also made high, another 4.608 MPPS is interleaved with a 9.216 MPPS, to give 13.824 MPPS. There will be interleaving of one of the 4.608 MPPS between every other pulse of 9.216 MPPS, i.e. two pulses with rise edges separated by 54 nanoseconds, and one by 108 nanoseconds, i.e. three pulses every 217 nanoseconds. When these pulses are counted down by 128(see figure 3B), the positive zero crossings of the output occur every 217 times 128/3 or 9.22 microseconds, corresponding to 108 kilohertz. Since the input pulses occur either every 54 nanoseconds or 108 nanoseconds, that variation of 54 nanoseconds may occur in the positive zero crossing of the divided down output wave form, in this case 9.22 microseconds, for a variation of .58 per cent.

If only the most significant bit is high and one of the much lesser significant bits is high, then the pulse rep rate is 108 nanoseconds, with an occasional additional pulse occurring, where the 54 nanoseconds pulse would be observed, so the divided frequency is slightly above 72 kilohertz, or 13.8 microseconds positive zero crossing rate, with a variation of 54 nanoseconds in the 18.8 microsecond or approximately 0.4 per cent total variation. If, on the other hand, nearly all the bits are high, nearly all the pulses occur every 54 nanoseconds, with a few at 108 nanoseconds, i.e. 54 nanosecond variation out of 144 kilohertz, or 6.944 microseconds, for a total variation of 0.78 per cent.

Examining the output of the binary rate multipliers and their frequency domain, it is seen that 18.432 megohertz is output part of the time, and 9.216 megohertz the rest of the time. When this is divided down by 128 (see figure 3B) the output averages out to 108 kilohertz, but with frequency modulation side bands that are down by approximately the division ratio, i.e. 128 or 42dB down from the desired output. In an effort to keep the FM side bands as low as reasonable, the division ratio is kept as high as possible, also making the binary rate multiplier operate at as high a frequency as reasonable.

The binary pulse train output from the binary cascaded binary rate multipliers are passed to a fixed divider circuit, shown in figure 3B, comprised of dividers 160,162. Preferably, dividers 160,162 are low power Schottky counters, commercially available as type 74LS193. Here , they are shown hooked up in a conventional manner to provide an overall divisor of 128.

The output from the dividers 160,162 is clocked into a shift register 164. Preferably, shift register 164 is a CMOS type MM74C164N. At the input to shift register 164, the system is arranged such that the pulse repetition rate is exactly 16 times the desired sinusoidal signal to be simulated. Thus, the parallel outputs from the shift register 164 are resistive weighted via resistor bank 166 in a voltage divider comprised of level control 168 and fixed resistor 170 to provide, in the well known manner, a 16 step approximation to a sine wave.

The sine wave is then amplified by amplifier 172 and routed through a T low pass filter 174 to provide the 6dB per octave attenuation, as shown as block 68 in figure 2.

In this manner, any desired sinusoidal signal can be simulated as directed by the microprocessor control of the system.

In summary, an improved low range altimeter signal simulator has been shown which is capable of either manual or automatic operation and is operable at rates corresponding to those actually encountered by air borne aircraft.

While the preferred embodiment of the invention has been described in detail, it should be apparent that many modifications and variations thereto are possible, all of which fall within the true spirit and scope of the invention.

CLAIMS

1. Apparatus for simulating a variable frequency periodic waveform comprising:

oscillator means for producing a predetermined frequency clock signal, said clock signal frequency being substantially higher than the highest signal to be simulated;

a controllable divisor frequency divider means receiving said clock signal at its input;

control means for producing a predetermined divisor signal responsive to the frequency of the signal to be simulated;

means for coupling said divisor signal to said controllable divider for determining the divisor thereof, and

converter means for converting the frequency divided clock signal to a corresponding frequency periodic waveform.

2. The apparatus of claim 1 wherein the control means comprises a central data unit including a microprocessor, associated memory and a clock; said central data unit being provided with programing such that it responds to a control input to produce said predetermined divisor signal in a digital format.

3. The apparatus of claim 2 wherein said controllable divisor frequency divider is comprised of binary rate multiplier means for multiplying said oscillator means clock signal with said central data unit produced divisor thereby generating said frequency divided clock signal.

4. The apparatus of claim 3 wherein said oscillator means is comprised of said central data unit clock.

5. The apparatus of claim 1 further operable for simulating predetermined amplitude analog signals, the apparatus further comprising:

digital to analog converter means for converting said frequency divided clock signal to a corresponding amplitude analog signal.

-----

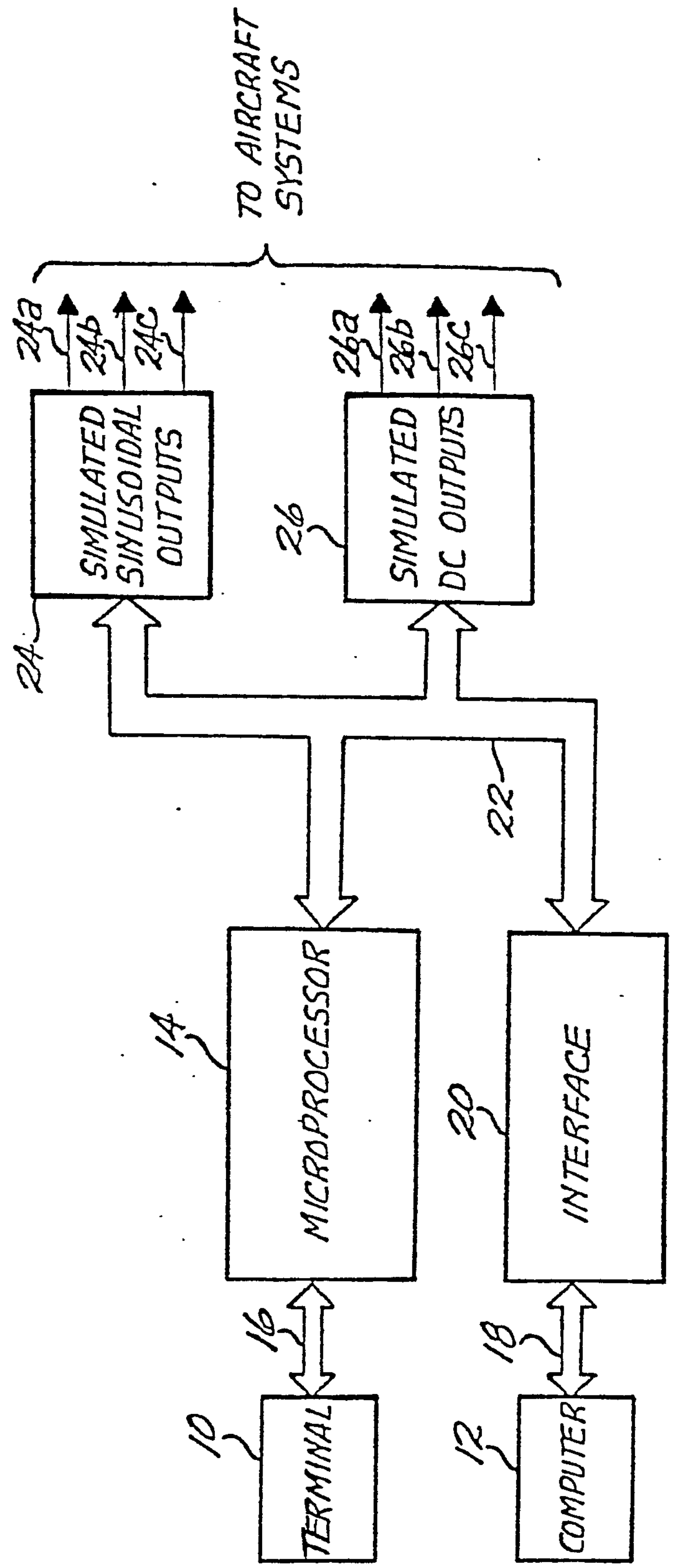
TO AIRCRAFT SYSTEMS
24a
24b
24c
26a
26b
26c
SIMULATED SINUSOIDAL OUTPUTS
24
SIMULATED DC OUTPUTS
26
22
MICROPROCESSOR
14
INTERFACE
20
16
18
TERMINAL
10
COMPUTER
12

Fig. 1

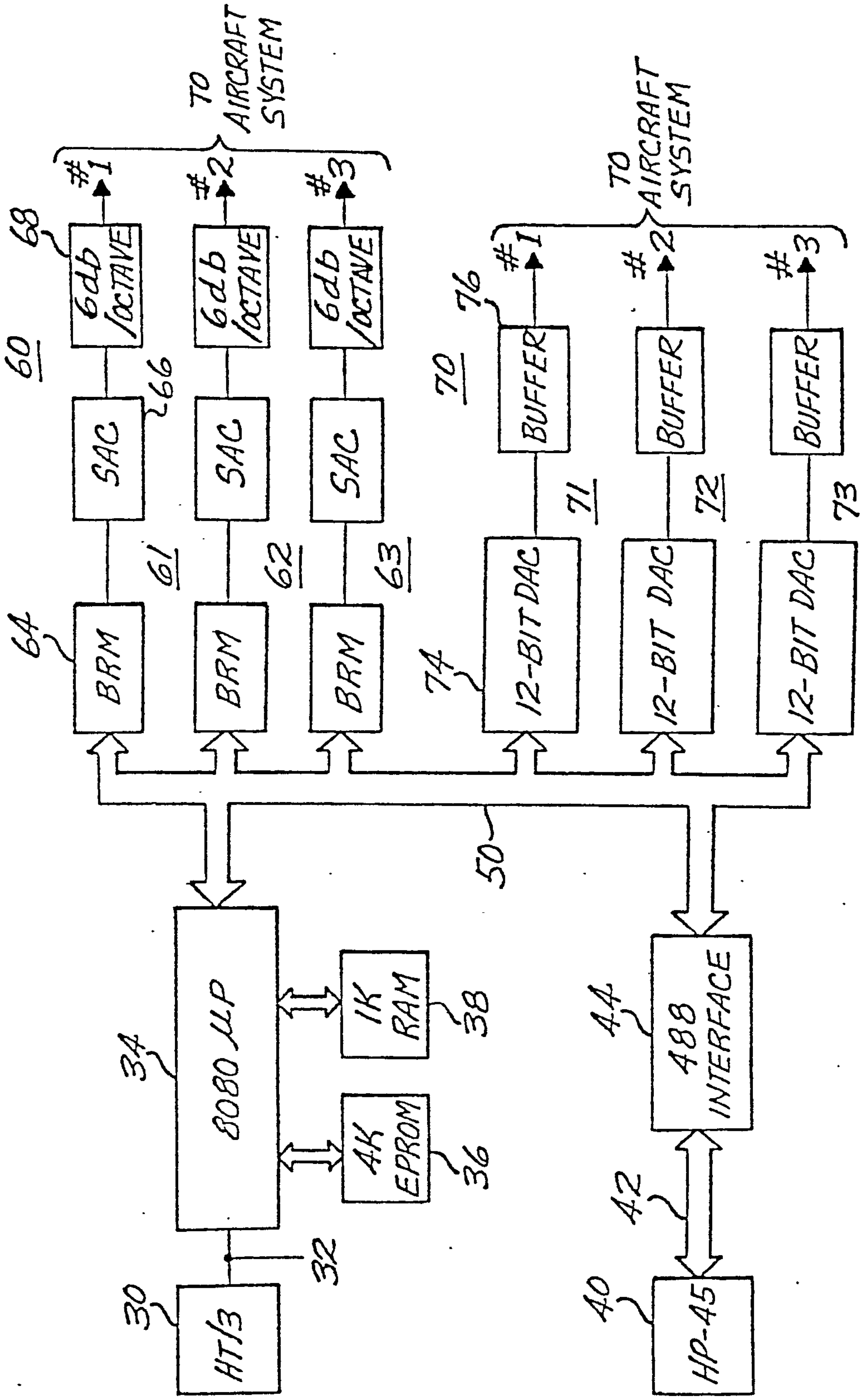
TO AIRCRAFT SYSTEM
#1
#2
#3
68
6db /OCTAVE
60
SAC
66
61
62
63
BRM
64
TO AIRCRAFT SYSTEM
76
70
BUFFER
71
72
73
12-BIT DAC
74
50
8080 µP
34
1K RAM
38
4K EPROM
36
488 INTERFACE
44
42
HP-45
40
HT/3
30
32

Fig. 2

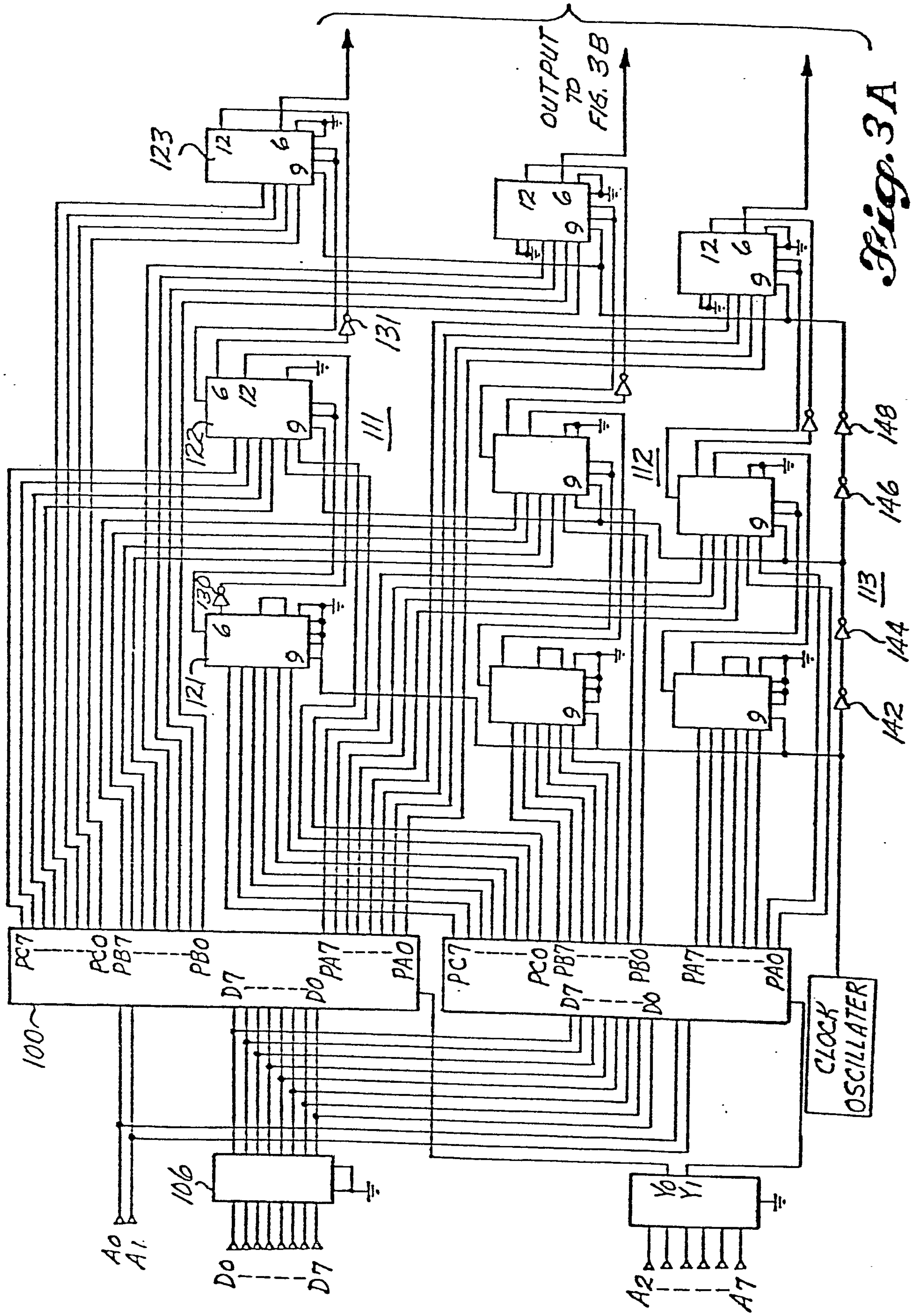
OUTPUT TO FIG. 3B
123
12
6
9
131
111
122
112
146
148
130
121
113
144
142
PC7
PC0
PB7
PB0
D7
D0
PA7
PA0
100
CLOCK OSCILLATER
106
Y0
Y1
A0
A1
D0
D7
A2
A7

Fig. 3A

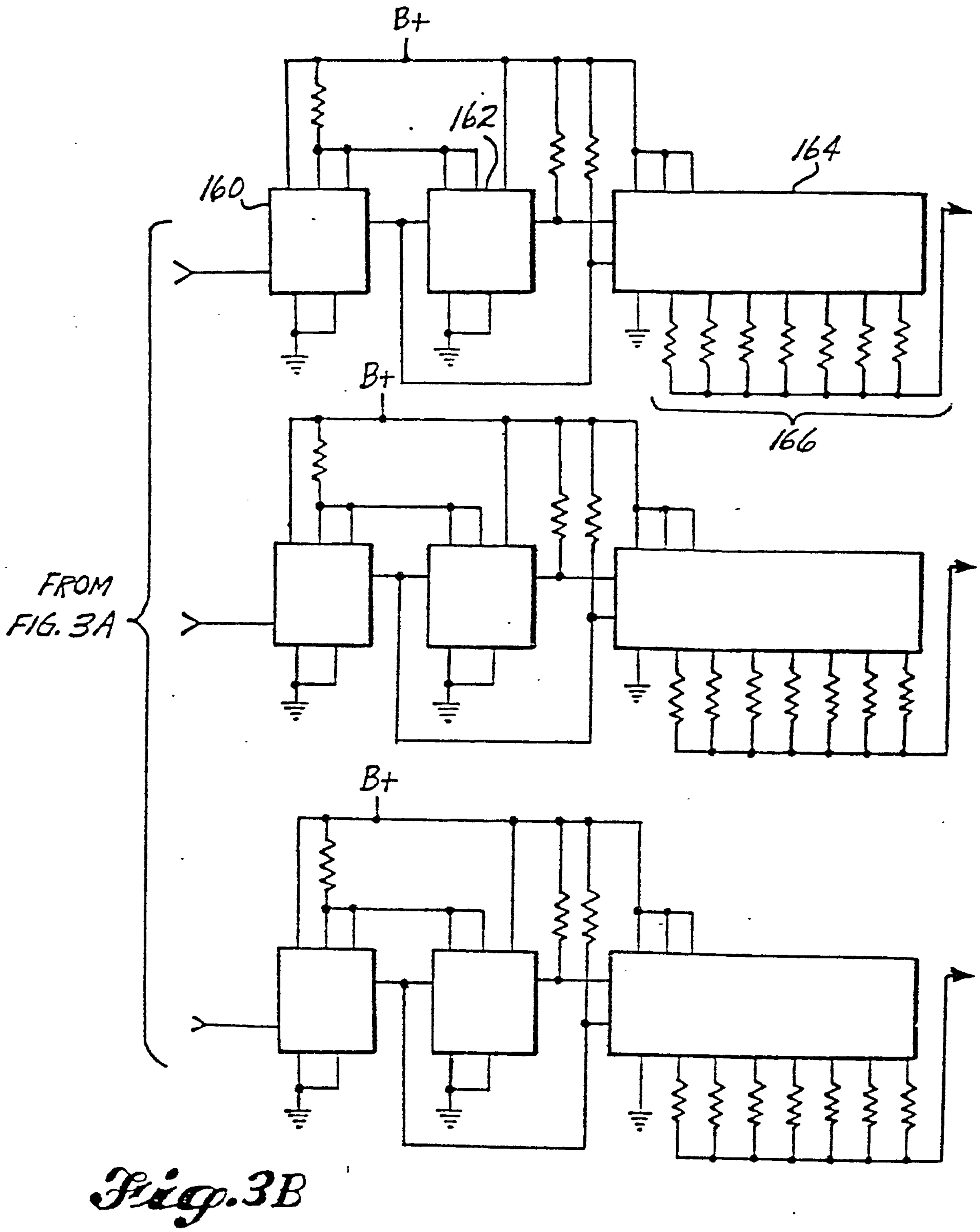


Fig. 3B

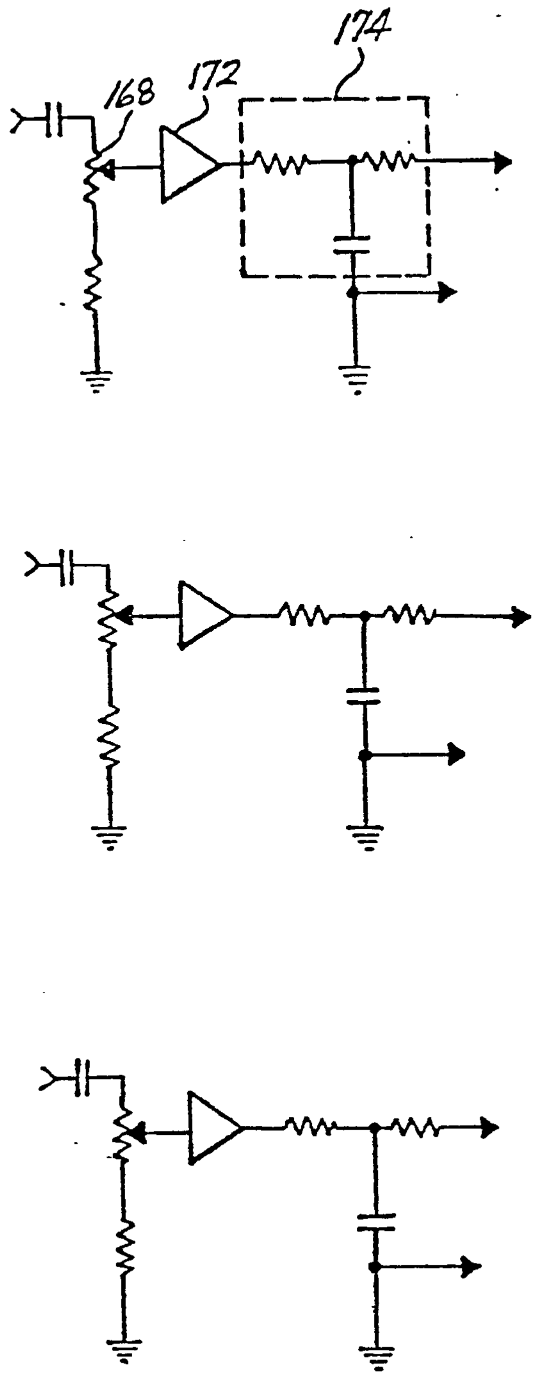


Fig.3C

European Patent Office

# EUROPEAN SEARCH REPORT

Application number

EP 80 20 1099.1

## DOCUMENTS CONSIDERED TO BE RELEVANT

| Category | Citation of document with indication, where appropriate, of relevant passages | Relevant to claim |
|---|---|---|
| | DE - A - 2 157 243 (O. VIERLING)<br>* fig. 1 to 3 *<br>-- | 1 |
| A | US - A - 4 121 213 (L.W. BUSH et al.)<br>* fig. 1 to 5 *<br>-- | |
| A | US - A - 4 068 178 (B.R. TUNZI)<br>* fig. 1 to 2 *<br>-- | |
| A | US - A - 3 544 996 (D.W. PILE)<br>* fig. 1 to 2 *<br>-- | |
| A | FR - A1 - 2 392 396 (ROCKWELL INTERNATIONAL CORP.)<br>* fig. 1 to 7 *<br>---- | |

CLASSIFICATION OF THE APPLICATION (Int Cl 3)

G 01 S 7/40

TECHNICAL FIELDS SEARCHED (Int. Cl.3)

G 01 S 7/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 24-02-1981 | BREUSING |